# EUROPÄISCHE PATENTANMELDUNG

(11) **EP 4 510 313 A1**
(43) Veröffentlichungstag der Anmeldung: **19.02.2025**
(21) Anmeldenummer: 23191720.4
(22) Anmeldetag: 16.08.2023
(51) Int. Cl.: H01M 50/10, H01M 50/325, H01M 50/333, H01M 10/052

(54) **BATTERIECONTAINER, SYSTEM UND FAHRZEUG**

(71) Anmelder: HOPPECKE Systemtechnik GmbH, 08056 Zwickau (DE)
(72) Erfinder: REINHOLD, Stefan, 08058 Zwickau (DE); TRAPP, Magnus, 33181 Bad Wünnenberg (DE); RUMMEL, Chris Peter, 59929 Brilon (DE)
(74) Vertreter: Brinkmann & Partner

(57) **Zusammenfassung**

Die Erfindung betrifft einen Batteriecontainer für Schienenfahrzeuge, Insbesondere für Eisenbahnen und Straßenbahnen, aufweisend ein Gehäuse, welches einen Innenraum zur Aufnahme von Lithium-Ionen-Akkumulatoren bereitstellt, dadurch gekennzeichnet, dass das Gehäuse eine Sicherheitsarmatur aufweist, welche dazu ausgebildet ist, bei Überschreiten eines vorgebbaren Ansprechdrucks wenigstens ein Fluid aus dem Innenraum des Gehäuses abzuleiten und das Gehäuse bei Unterschreiten eines vorgebbaren Schließdrucks fluiddicht zu verschließen

## Beschreibung

Die Erfindung betrifft einen Batteriecontainer für Schienenfahrzeuge, Insbesondere für Eisenbahnen und Straßenbahnen, aufweisend ein Gehäuse, welches einen Innenraum zur Aufnahme von Lithium-Ionen-Akkumulatoren bereitstellt. Ferner betrifft die Erfindung System aufweisend einen Batteriecontainer und einen Lithium-Ionen-Akkumulator sowie ein Fahrzeug, insbesondere ein Schienenfahrzeug, vorzugsweise eine Eisenbahn oder eine Straßenbahn, mit einem erfindungsgemäßen System.

Batteriecontainer für Lithium-Ionen-Akkumulatoren sind dem Grunde nach aus dem Stand der Technik bekannt. Ist jedoch ein Einsatz im Fahrzeugbereich, insbesondere bei Schienenfahrzeugen, vorgesehen muss die Aufbewahrung der Lithium-Ionen-Akkumulatoren gewissen Sicherheitsstandards genügen.

Insbesondere muss der Batteriecontainer einerseits fluiddicht und andererseits brandsicher ausgebildet sein.

Es hat sich jedoch gezeigt, dass gängige - nicht im speziellen für Lithium-Ionen-Akkumulatoren ausgelegte - Batteriecontainer im Falle des thermischen Durchgehens der im Innenraum befindlichen Lithium-Ionen-Akkumulatoren bersten und somit nicht nur den geforderten Standards nicht genügen, sondern auch ein erhebliches Sicherheitsrisiko darstellen. Der Grund ist, dass es beim thermischen Durchgehen von Lithium-Ionen-Akkumulatoren zu schlagartigen Verpuffungen und der Bildung von Brandgasen kommt, wodurch der Innendruck im Batteriecontainer augenblicklich ansteigt, was unweigerlich zu dessen Bersten führt.

Es ist bekannt, Batteriecontainer mit Berstscheiben auszurüsten, die aus dünnen Metallfolien gebildet sind und bei Überschreiten eines bestimmten Innendrucks irreversibel reißen und so einen Druckausgleich mit der Umgebung ermöglichen. Diese bekannten Berstscheiben genügen jedoch nicht den im Schienenverkehr für den Betrieb von Lithium-Ionen-Akkumulatoren geforderten Brandschutzeigenschaften. Ferner wird hierdurch nach Entweichen des Überdrucks das Endringen von Frischluft in das Containerinnere ermöglicht, was zu einer Intensivierung eines möglichen Akkumulatorbrands führen kann.

Darüber hinaus ist aus der EP 1 947 712 B1 eine flüssigkeitsundurchlässige, aber gasdurchlässige Membran bekannt, welche einen kontinuierlichen Druckausgleich zwischen einem Batteriegehäuse und einem gasführenden System zur Abführung von insbesondere Wasserstoffgas erlaubt. Eine solche Membran kann jedoch beim Durchgehen eines Lithium-lonen-Akkumulators den sich schlagartig aufbauenden Innendruck nicht abführen, da der Volumenstrom durch die Membran zu gering ist. Vielmehr würde die Membran aufgrund des auf ihr lastenden Drucks zerstört werden.

Der Erfindung liegt daher die **Aufgabe** zu Grunde, einen Batteriecontainer anzugeben, der auch im Falle eines thermischen Durchgehens der in ihm angeordneten Batterien voll funktionsfähig bleibt und einem etwaigen Brand der Batterien verhindert bzw. eindämmt.

Zur **Lösung** der Aufgabe wird mit der Erfindung ein Batteriecontainer für Schienenfahrzeuge, insbesondere für Eisenbahnen und Straßenbahnen, vorgeschlagen, aufweisend ein Gehäuse, welches einen Innenraum zur Aufnahme von Lithium-Ionen-Akkumulatoren bereitstellt, dadurch gekennzeichnet, dass das Gehäuse eine Sicherheitsarmatur aufweist, welche dazu ausgebildet ist, bei Überschreiten eines vorgebbaren Ansprechdrucks wenigstens ein Fluid aus dem Innenraum des Gehäuses abzuleiten und das Gehäuse bei Unterschreiten eines vorgebbaren Schließdrucks fluiddicht zu verschließen.

Mit der Erfindung können sich im Inneren bildende Gase, insbesondere infolge eines Brands oder einer Verpuffung, bei Erreichen eines kritischen Ansprechdrucks, vorzugsweise automatisch, unverzüglich abgeführt werden und damit ein Druckausgleich mit der Umgebung hergestellt werden. Wird anschließend ein vorgebbarer Schließdruck nach erfolgter Ableitung der Gase wieder unterschritten schließt die Sicherheitsarmatur, vorzugsweise automatisch, wieder. Das Gehäuse wird hierdurch wieder fluiddicht verschlossen. Der Eintritt von Sauerstoff oder der Austritt von giftigen Batterieflüssigkeiten ist damit im Gegensatz zu einer aus dem Stand der Technik bekannten Berstscheibe auch nach dem erfolgten Druckausgleich ausgeschlossen. Das Risiko für im Umkreis um den Batteriecontainer befindlichen Personen gesundheitlichen Schaden zu nehmen wird hierdurch erheblich reduziert. Auch nimmt die Gefahr von Folgeschäden für den Batteriecontainer selbst sowie das den Batteriecontainer aufnehmenden Fahrzeug signifikant ab.

Eine "Sicherheitsarmatur" im Sinne der Erfindung bezeichnet eine Einheit, welche potenziell druckbeaufschlagte Räume oder Druckbehälter, vorliegend das Gehäuse des Batteriecontainers, vor einem für unzulässigen Druckanstieg im Innenraum schützt. Ein "unzulässiger Druckanstieg" ist im Sinne der Erfindung ein solcher, bei dem die Gefahr besteht, dass das Gehäuse irreversiblen Schaden nimmt und es Gefahr läuft zu bersten. Zur Unterscheidung zwischen einem zulässigen und einem unzulässigen Druckanstieg ist ein Ansprechdruck der Sicherheitsarmatur im Sinne eines bestimmten Druckwerts oder eines entsprechenden Wertebereichs vorgebbar. Die Sicherheitsarmatur ist dabei derart steuerbar, dass bei Überschreiten des Ansprechdruckes Gase, Dämpfe oder Flüssigkeiten in die Atmosphäre oder in ein Auffangsystem, wie etwa eine Sammelrohrleitungen oder einen Auffangbehälter, abgeleitet werden. Der Ansprechdruck ist dabei der Druck, bei welchem die Sicherheitsarmatur anfängt zu öffnen, um den Druck abzublasen. Die Sicherheitsarmatur weist vorzugsweise einen Ansprechdruck von 50 hPa bis 100 hPa, vorzugsweise von 65 hPa bis 85 hPa, insbesondere von 75 hPa, auf. Der Ansprechdruck unterliegt vorzugsweise einer Toleranz von ± 3 %. Der Schließdruck ist demgegenüber der Druckwert, bei welchem die Sicherheitsarmatur wieder komplett geschlossen ist, nachdem der Überdruck abgeblasen wurde. Dieser Wert liegt vorzugsweise 10 % bis 20 % unterhalb des Ansprechdrucks. Eine weitere Kenngröße der erfindungsgemäßen Sicherheitsarmatur ist der "Öffnungsdruck". Er ist der Punkt, bei dem die Sicherheitsarmatur den maximalen Öffnungsgrad für den erforderlichen abzuführenden Massestrom erreicht. Der Öffnungsdruck ist ebenso wie der Ansprechdruck vorgebbar. Der Öffnungsdruck kann vorzugsweise dem Ansprechdruck entsprechen oder, vorzugsweise 5 % bis 10 %, über dem Ansprechdruck liegen.

Gemäß einem bevorzugten Merkmal der Erfindung ist vorgesehen, dass die Sicherheitsarmatur als Rückschlagarmatur ausgebildet ist. Eine Rückschlagarmatur ist ein Bauteil, welches die Strömung eines Fluids (Flüssigkeit, Gas) in nur einer Richtung zulässt. Die Rückschlagarmaturen verfügt hierzu vorzugsweise über ein, insbesondere federbelastetes, Schließelement. Das Schließelement wird in einer Richtung, insbesondere durch die Feder geschlossen, in der anderen Richtung dagegen vom Druck des strömenden Fluids freigegeben. Hierbei wird das Schließelement in einen Dichtungssitz der Armatur gedrückt. Steht in der Durchlassrichtung ein Druck an, der die Rückstellkraft, insbesondere der Feder, überwinden kann, wird das Schließelement vom Dichtungssitz abgehoben und der Durchfluss ist frei.

Im Allgemeinen weist die Sicherheitsarmatur vorzugsweise einen statischen Teil und einen beweglichen Teil auf. Die Sicherheitsarmatur ist insofern wenigstens zweiteilig ausgebildet. Der statische Teil der Sicherheitsarmatur ist dabei relativ zum Gehäuse unbeweglich an diesem angeordnet. Der bewegliche Teil ist demgegenüber relativ beweglich zum Gehäuse an dem statischen Teil der Sicherheitsarmatur angeordnet. Der bewegliche Teil stellt das Schließelement bereit. Der statische Teil stellt einen Dichtungssitz mit Dichtungsmittel bereit. Vom Dichtungssitz ist dabei ein in der Gehäuseaußenwand ausgebildetes Durchgangsloch eingefasst. Das bewegliche Teil sitzt unterhalb des vorgebbaren Ansprechdrucks im statischen Teil und verschließt das Durchgangsloch fluiddicht, insbesondere gasdicht. Bei Erreichen des vorgebbaren Ansprechdrucks wird das bewegliche Teil durch den Innendruck im Gehäuse aus dem statischen Teil herausgedrückt, so dass das Durchgangsloch unverschlossen ist und eine Fluidströmung aus dem Innenraum des Gehäuses zur Außenseite des Gehäuses erlaubt. Bei darauffolgender Unterschreitung des Schließdrucks schlägt der bewegliche Teil, vorzugsweise augenblicklich, in den statischen Teil zurück und verschließt die Durchgangsöffnung wieder fluiddicht, insbesondere gasdicht.

Je nach Ausgestaltung der Sicherheitsarmatur, insbesondere der Rückschlagarmatur, ist vorgesehen, dass der bewegliche Teil der Sicherheitsarmatur rotatorisch und/oder translatorisch am statischen Teil angelenkt ist. Hierdurch wird ermöglicht, dass bei Erreichen des Ansprechdrucks der bewegliche Teil der Armatur durch rotatorische und/oder translatorische Bewegung aus der geschlossenen Stellung ausgelenkt und/oder verschoben werden kann und so der Herstellung einer Strömungsverbindung zwischen Gehäuseinnenraum und Gehäuseaußenseite zum Zwecke des Druckausgleichs dient. Vorzugsweise bewirkt die Auslenkung und/oder Verschiebung des beweglichen Teils den Aufbau einer der Auslenk- und/oder Verschiebungsrichtung entgegengerichteten Rückstellkraft einer Feder. Bei Unterschreiten des Schließdrucks bewirkt die am beweglichen Teil anliegende Rückstellkraft der Feder, dass das bewegliche Teil aus der geöffneten Stellung in die geschlossene Stellung zurückbewegt wird.

Gemäß einem bevorzugten Merkmal der Erfindung ist vorgesehen, dass die Rückschlagarmatur als Rückschlagklappe ausgebildet ist. Der bewegliche Teil der Rückschlagklappe ist hierzu über eine seiner Kanten an dem statischen Teil der Rückschlagklappe oder dem Gehäuse angelenkt. Die Ausbildung als Rückschlagklappe hat den Vorteil eines vergleichsweise einfachen konstruktiven Aufbaus.

Gemäß einem bevorzugten Merkmal der Erfindung ist vorgesehen, dass die Rückschlagarmatur als Rückschlagventil, insbesondere Tellerrückschlagventil, ausgebildet ist. Der bewegliche Teil des Rückschlagventils ist hierzu gegenüber dem statischen Teil des Rückschlagventils oder des Gehäuses in axialer Richtung linear beweglich ausgebildet. Hierzu weist der bewegliche Teil des Rückschlagventils einen Führungsabschnitt auf, welcher in einer Führungsaufnahme des statischen Teils des Rückschlagventils oder Gehäuses linearbeweglich geführt ist. Ferner verfügt der bewegliche Teil des Ventils über ein Schließelement, welches insbesondere als Kugel oder Teller ausgebildet sein kann. Vorzugsweise ist das Schließelement als Teller ausgebildet. Das Rückschlagventil ist damit als Tellerrückschlagventil ausgebildet. Die Ausbildung als Rückschlagventil hat sich auch bei einer Vielzahl von Öffnungs-/Schließdurchgängen als mechanisch vergleichsweise stabil erwiesen. Ferner sind mit einem Ventil erweiterte Möglichkeiten zur Steuerung und/oder Regelung möglich.

Vorzugsweise ist das Rückschlagventil als Proportionalventil oder als Vollhubventil ausgebildet. Die Unterschiede sowie Vor- und Nachteile der beiden Ventiltypen liegen im Öffnungsverhalten. Das Öffnungsverhalten eines Proportionalventils zwischen dem Erreichen des Ansprechdrucks bis zum vollständigen Öffnen verläuft proportional zum Druck. Bei Proportionalventilen liegt der Öffnungsdruck vorzugsweise über dem Ansprechdruck. Im Gegensatz dazu öffnet das Vollhubventil bei Erreichen des Ansprechdrucks schlagartig und mit vollem Hub. Bei Vollhubventilen entspricht der Öffnungsdruck vorzugsweise dem Ansprechdruck. Proportionalventile sind in vorteilhafter Weise vielseitiger einsetzbar, da sie eine Steuerung des Volumenstroms ermöglichen. Vollhubventile bieten demgegenüber ein erhöhtes Maß an Sicherheit, insbesondere gegenüber schlagartigen Druckanstiegen im Innenraum, etwa aufgrund von spontaner Verpuffung, da der volle Strömungsquerschnitt augenblicklich zur Verfügung steht.

Gemäß einem bevorzugten Merkmal der Erfindung ist vorgesehen, dass die Sicherheitsarmatur dazu ausgebildet ist, bei Erreichen des vorgebbaren Ansprechdrucks im Innenraum des Gehäuses automatisch eine Strömungsverbindung zwischen dem Innenraum des Gehäuses und der Außenseite des Gehäuses zu öffnen und bei Unterschreiten eines vorgebbaren Schließdrucks im Innenraum des Gehäuses die Strömungsverbindung automatisch abzusperren. Vorzugsweise ist die Sicherheitsarmatur dabei entgegen des im Innenraum des Gehäuses auf sie einwirkenden Drucks federbelastet ist.

Vorzugsweise zeichnet sich die Erfindung durch wenigstens eine Feder aus, welche sich einendseitig an der Innenseite des Gehäuses oder dem statischen Teil der Sicherheitsarmatur und andernendseitig an dem beweglichen Teil der Sicherheitsarmatur abstützt. Vorzugsweise ist die Feder als Torsionsfeder ausgebildet, wenn die Sicherheitsarmatur als Rückschlagklappe ausgebildet ist. Demgegenüber ist es bevorzugt, dass die Feder als Schraubenzugfeder oder Schraubendruckfeder ausgebildet ist, wenn die Sicherheitsarmatur als Rückschlagventil ausgebildet ist.

Gemäß einem bevorzugten Merkmal der Erfindung ist vorgesehen, dass die Sicherheitsarmatur wenigstens teilweise aus Metall gebildet oder damit beschichtet ist. Insbesondere ist sie aus einem gegenüber dem Elektrolyten einer Li-ionen-Batterie korrosionsbeständigen Metall gebildet oder beschichtet. Das Metall kann insbesondere Titan oder eine Titan-haltige Legierung sein.

Gemäß einem bevorzugten Merkmal der Erfindung ist ein Sammelrohr und/oder ein Auffangbehälter vorgesehen, der über die Sicherheitsarmatur bei Überschreiten des vorgebbaren Ansprechdrucks mit dem Innenraum des Gehäuses strömungstechnisch verbunden ist. Hierdurch wird sichergestellt, dass gesundheits- und/oder umweltschädliche Flüssigkeiten und/oder Gase nicht unmittelbar in einen Fahrgastraum oder die Atmosphäre abgelassen werden. Stattdessen können derartige Fluide mittels des Sammelrohrs an einen sicheren Austrittsort geleitet oder im Auffangbehälter aufgefangen und einstweilen gelagert werden. Auffangrohr und Sammelbehälter sind insoweit miteinander kombinierbar, dass mittels des Auffangrohrs aus dem Innenraum des Gehäuses ausgeleitete Fluide in einen an sicherer Stelle angeordneten Sammelbehälter geleitet werden können. Auch die Kombination mehrerer Sammelrohre und Auffangbehälter ist denkbar.

Die Erfindung betrifft ferner ein System mit einem Batteriecontainer gemäß der Erfindung, wobei im Innenraum des Batteriecontainers wenigstens ein Lithium-Ionen-Akkumulator angeordnet ist.

Darüber hinaus betrifft die Erfindung eine Eisenbahn oder Straßenbahn, mit einem System gemäß der Erfindung.

Die Erfindung wird nachfolgend anhand von Ausführungsbeispielen erläutert. Dabei zeigen
- Fig. 1: eine erfindungsgemäße Sicherheitsarmatur gemäß einer ersten Ausführungsform in perspektivischer Ansicht vom Innenraum des Gehäuses gesehen in geschlossener Stellung;
- Fig. 2: eine erfindungsgemäße Sicherheitsarmatur gemäß Figur 1 in perspektivischer Ansicht vom Innenraum des Gehäuses gesehen in geöffneter Stellung;
- Fig. 3: eine erfindungsgemäße Sicherheitsarmatur gemäß Figur 1 in seitlicher Ansicht in geschlossener Stellung;
- Fig. 4: eine erfindungsgemäße Sicherheitsarmatur gemäß Figur 1 in seitlicher Ansicht in geöffneter Stellung;
- Fig. 5: eine erfindungsgemäße Sicherheitsarmatur gemäß einer zweiten Ausführungsform in perspektivischer Ansicht vom Innenraum des Gehäuses gesehen in geschlossener Stellung;
- Fig. 6: eine erfindungsgemäße Sicherheitsarmatur gemäß Figur 5 in perspektivischer Ansicht vom Innenraum des Gehäuses gesehen in geöffneter Stellung;
- Fig. 7: eine erfindungsgemäße Sicherheitsarmatur gemäß Figur 5 in seitlicher Ansicht in geschlossener Stellung;
- Fig. 8: eine erfindungsgemäße Sicherheitsarmatur gemäß Figur 5 in seitlicher Ansicht in geöffneter Stellung.

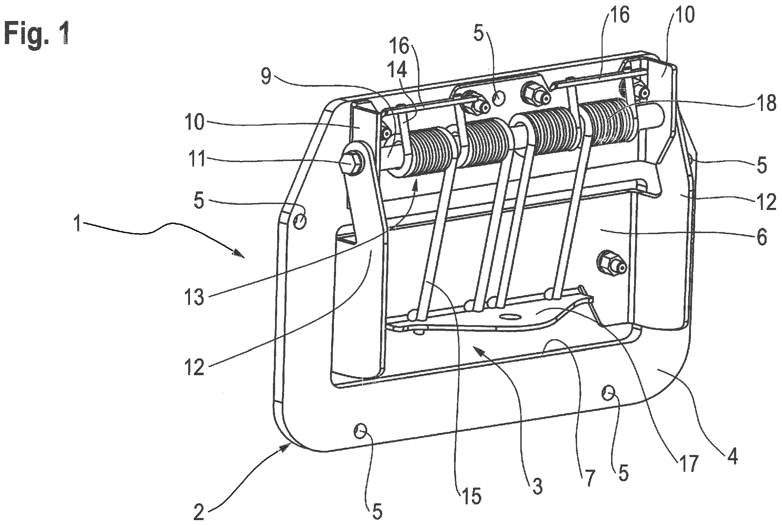

Figur 1 zeigt eine erste erfindungsgemäße Sicherheitsarmatur 1. Die Sicherheitsarmatur 1 ist vorliegend als Rückschlagklappe ausgebildet. Die Ausbildung als Rückschlagklappe hat den Vorteil eines vergleichsweise einfachen konstruktiven Aufbaus.

Sie verfügt über einen statischen Teil 2 und einen beweglichen Teil 3. Die

Sicherheitsarmatur 1 ist insofern wenigstens zweiteilig ausgebildet. Der statische Teil 2 der Sicherheitsarmatur 1 ist dabei relativ zum vorliegend nicht dargestellten Gehäuse unbeweglich an diesem angeordnet. Zur unbeweglichen Anordnung am Gehäuse weist der statische Teil 2, der vorliegend einen umlaufenden Rahmen 4 aufweist, Löcher 5 zur Aufnahme von Befestigungsmitteln, wie etwa Schrauben, auf. Die Löcher 5 sind vom Rahmen 4 bereitgestellt.

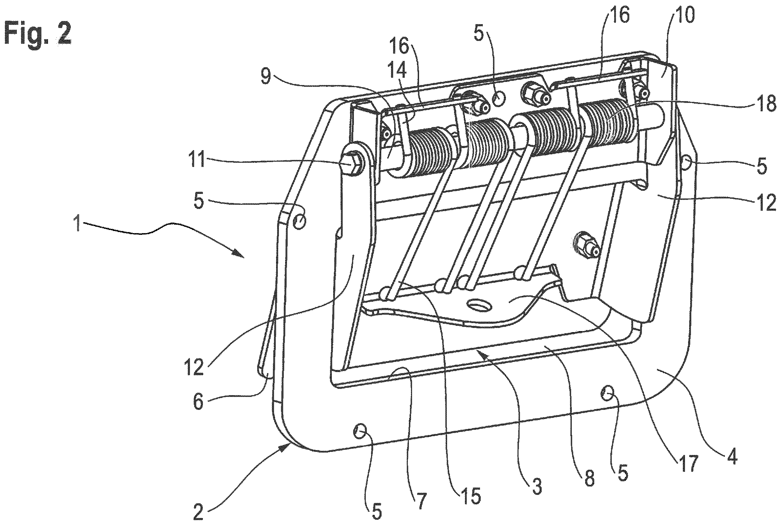

Der bewegliche Teil 3 ist demgegenüber relativ beweglich zum Gehäuse und dem statischen Teil 2 an dem statischen Teil 2 der Sicherheitsarmatur 1 angeordnet. Der bewegliche Teil 3 stellt ein Schließelement in Form einer Klappe 6 bereit. Der statische Teil 2 stellt einen Dichtungssitz 7 mit nicht dargestelltem Dichtungsmittel bereit. Vom Dichtungssitz 7 ist dabei ein in der Gehäuseaußenwand ausgebildetes Durchgangsloch 8 (Fig. 2) eingefasst. Der bewegliche Teil 3 sitzt unterhalb des vorgebbaren Ansprechdrucks im statischen Teil 2 und verschließt das Durchgangsloch 8 fluiddicht, insbesondere gasdicht.

Der bewegliche Teil 3 der Sicherheitsarmatur ist vorliegend rotatorisch am statischen Teil 2 angelenkt. Hierfür stellt der statische Teil 2 eine Welle 9 bereit. Die Welle 9 ist drehbeweglich in zwei einander gegenüberliegend am Rahmen 4 angeordneten Wellenaufnahmen 10 gelagert. Die Welle 9 ist mittels Schrauben 11 beidendseitig mit jeweils einem Dreharm 12 des beweglichen Teils 3 verbunden. Hierdurch wird ermöglicht, dass bei Erreichen des Ansprechdrucks der bewegliche Teil 3 der Armatur 1 durch rotatorische Bewegung aus der geschlossenen Stellung ausgelenkt werden kann und so der Herstellung einer Strömungsverbindung zwischen Gehäuseinnenraum und Gehäuseaußenseite zum Zwecke des Druckausgleichs dient.

Vorliegend bewirkt die Auslenkung des beweglichen Teils 3 den Aufbau einer der Auslenkrichtung entgegengerichteten Rückstellkraft von vorliegend vier Federn 13. Bei Unterschreiten eines vorgebbaren Schließdrucks bewirkt die am beweglichen Teil 3 anliegende Rückstellkraft der Federn 13, dass das bewegliche Teil 3 aus der geöffneten Stellung in die geschlossene Stellung zurückbewegt wird.

Die Federn 13 stützen sich einendseitig am statischen Teil 2 der Sicherheitsarmatur 1 und andernendseitig an dem beweglichen Teil 3 der Sicherheitsarmatur 1 ab. Die Federn 13 sind vorliegend jeweils als Torsionsfeder ausgebildet. Jede Feder 13 weist jeweils einendseitig ein freies Ende 14, 15 auf. Das eine freie Ende 14 wirkt dabei mit einer Federaufnahme 16 des statischen Teils 2 zusammen, welche am Rahmen 4 angeordnet ist. Das andere freie Ende 15 wirkt demgegenüber mit einer Federaufnahme 17 des beweglichen Teils 3 zusammen, welche an der Klappe 6 angeordnet ist.

Ferner verfügen die Federn 13 jeweils über einen spiralförmigen Abschnitt 18, welcher jeweils koaxial auf der Welle 9 angeordnet ist. Die Federn 13 sind dabei in axialer Richtung beabstandet voneinander auf der Welle 9 angeordnet.

Figur 2 zeigt die Sicherheitsarmatur 1 nach Figur 1 in geöffneter Stellung.

Zu erkennen ist, dass der bewegliche Teil 3 gegenüber dem statischen Teil 2 nach Art einer Klappe rotatorisch ausgelenkt und aus dem Dichtungssitz 7 des statischen Teils 2 gedrückt ist.

Hierzu hat der Innendruck im Gehäuse den vorgegebenen Ansprechdruck der Sicherheitsarmatur erreicht.

Die am beweglichen Teil 3 durch die Federn 13 anliegende Rückstellkraft ist mit Erreichen des Ansprechdrucks überwunden worden.

Im geöffneten Zustand besteht eine Strömungsverbindung zwischen dem Innenraum des Gehäuses und der Außenseite des Gehäuses über das Durchgangsloch 8

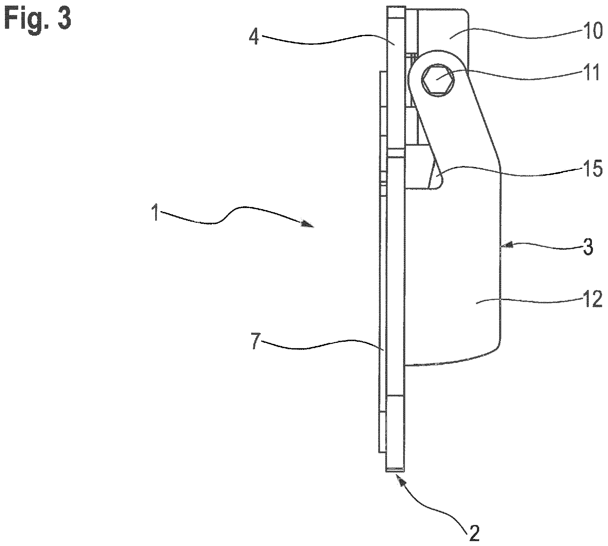

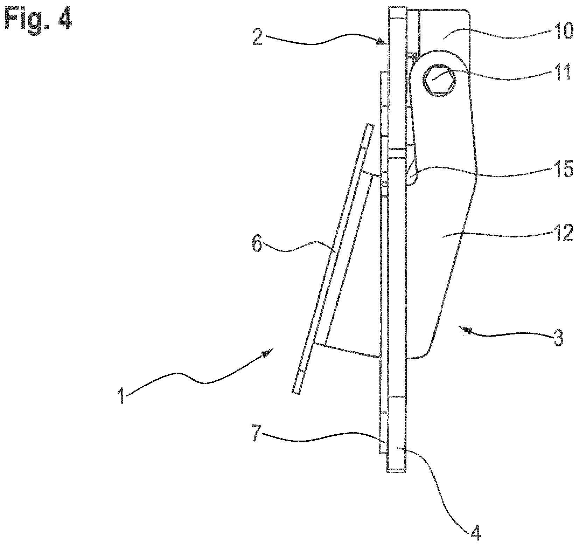

Die Figuren 3 und 4 zeigen die Ausführungsform gemäß Figuren 1 und 2 in seitlicher Ansicht. Figur 3 in geschlossener Form und Figur 4 in geöffneter Form.

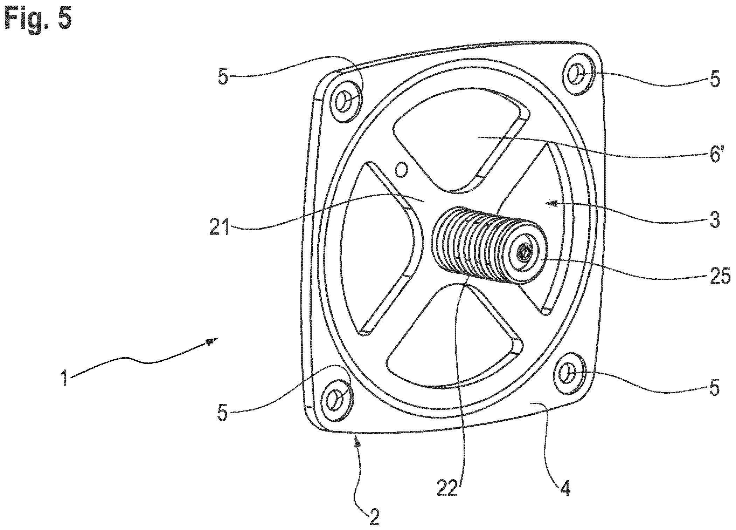

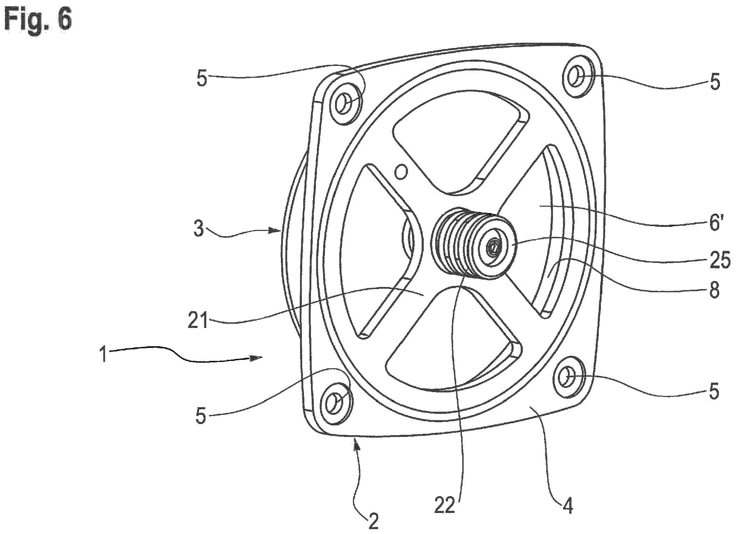

Figuren 5 und 6 zeigen eine zweite erfindungsgemäße Sicherheitsarmatur 1. Die Sicherheitsarmatur 1 ist vorliegend als Tellerrückschlagventil ausgebildet. Die Ausbildung als Tellerrückschlagventil hat u.a den Vorteil bei einer Vielzahl von Öffnungs-/Schließdurchgängen einer hohen mechanischen Stabilität. Ferner sind mit einem solchen Ventil erweiterte Möglichkeiten zur Steuerung und/oder Regelung des Volumenstroms möglich.

Es verfügt über einen statischen Teil 2 und einen beweglichen Teil 3. Die Sicherheitsarmatur 1 ist insofern wenigstens zweiteilig ausgebildet. Der statische Teil 2 der Sicherheitsarmatur 1 ist dabei relativ zum vorliegend nicht dargestellten Gehäuse unbeweglich an diesem angeordnet. Zur unbeweglichen Anordnung am Gehäuse weist der statische Teil 2, der vorliegend einen umlaufenden Rahmen 4 aufweist, Löcher 5 zur Aufnahme von Befestigungsmitteln, wie etwa Schrauben, auf. Die Löcher 5 sind vom Rahmen 4 bereitgestellt.

Der bewegliche Teil 3 ist demgegenüber relativ beweglich zum Gehäuse und dem statischen Teil 2 an dem statischen Teil 2 der Sicherheitsarmatur 1 angeordnet. Der bewegliche Teil 3 stellt ein Schließelement in Form einer kreisförmigen Scheibe 6' bereit, welche den "Teller" des Tellerrückschlagventils bildet. Der statische Teil 2 stellt einen Dichtungssitz 7 mit nicht dargestelltem Dichtungsmittel bereit. Vom Dichtungssitz 7 ist dabei ein in der Gehäuseaußenwand ausgebildetes Durchgangsloch 8 (Fig. 6) eingefasst. Der bewegliche Teil 3 sitzt unterhalb des vorgebbaren Ansprechdrucks im statischen Teil 2 und verschließt das Durchgangsloch 8 fluiddicht, insbesondere gasdicht.

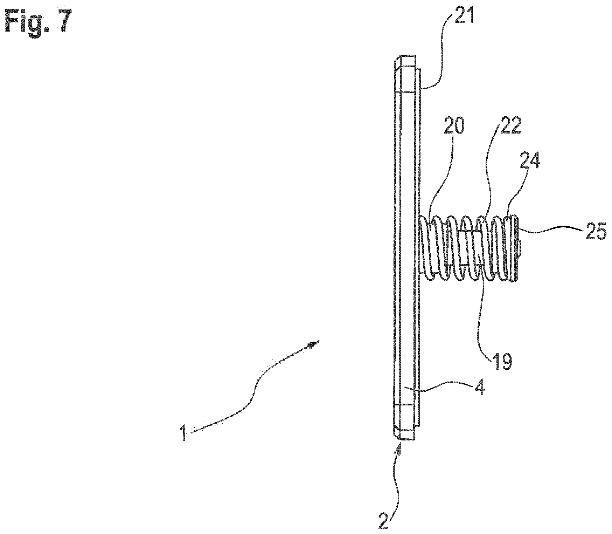

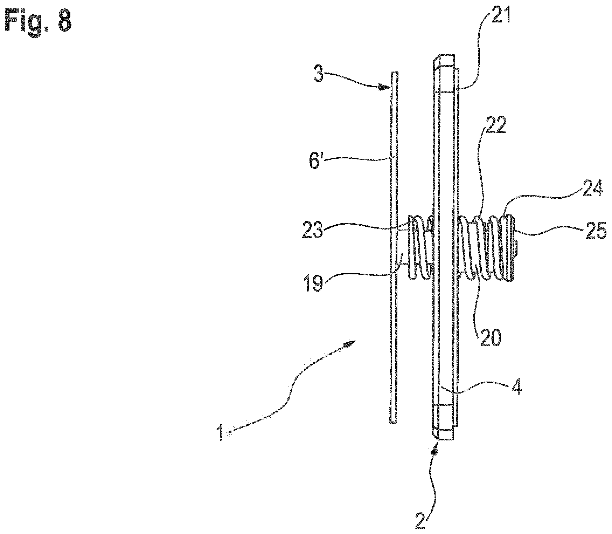

Der bewegliche Teil 3 des Tellerrückschlagventil ist hierzu gegenüber dem statischen Teil 2 des Tellerrückschlagventil und dem Gehäuse in axialer Richtung linear beweglich ausgebildet. Hierzu weist der bewegliche Teil 3 des Tellerrückschlagventil einen Führungsabschnitt 19 (Figuren 7 und 8) auf, welcher in einer Führungsaufnahme 20 (Figuren 7 und 8) des statischen Teils 2 des Tellerrückschlagventil linearbeweglich geführt ist. Hierdurch wird ermöglicht, dass bei Erreichen des Ansprechdrucks der bewegliche Teil 3 der Sicherheitsarmatur 1 durch translatorische Bewegung aus der geschlossenen Stellung in die geöffnete Stellung gedrückt werden kann und so der Herstellung einer Strömungsverbindung zwischen Gehäuseinnenraum und Gehäuseaußenseite zum Zwecke des Druckausgleichs dient.

Die Führungsaufnahme 20 ist an einem kreuzförmigen Verstärkungsabschnitt 21 des statischen Teils 2 angeordnet. Der Verstärkungsabschnitt ist aus zwei einander in einem zentralen Knotenpunkt kreuzenden Stegen gebildet. Die Enden der Stege sind vorliegend mit dem Rahmen 4 verbunden. Im Knotenpunkt des kreuzförmigen Abschnitts ist ein vom Führungsaufnahme 20 eingefasstes zentrales Führungsloch für den Führungsabschnitt 19 ausgebildet. Der Verstärkungsabschnitt 21, die Führungsaufnahme 20, das Führungsloch, das Durchgangsloch 8 und die Scheibe 6' sind relativ zum Führungsabschnitt 19 koaxial zueinander angeordnet.

Die Sicherheitsarmatur 1 in Form des Tellerrückschlagventil ist vorliegend als Proportionalventil ausgebildet. Das Öffnungsverhalten des Tellerrückschlagventil verläuft damit zwischen dem Erreichen des Ansprechdrucks bis zum vollständigen Öffnen proportional zum Druck. Der Öffnungsdruck liegt damit über dem Ansprechdruck. Durch die Ausgestaltung als Proportionalventil ist das Tellerrückschlagventil in vorteilhafter Weise vielseitiger einsetzbar, da es eine Steuerung des Volumenstroms ermöglicht.

Vorliegend bewirkt die Auslenkung des beweglichen Teils 3 den Aufbau einer der translatorischen Bewegungsrichtung entgegengerichteten Rückstellkraft von vorliegend einer Feder 22. Bei Unterschreiten eines vorgebbaren Schließdrucks bewirkt die am beweglichen Teil 3 anliegende Rückstellkraft der Feder 22, dass der bewegliche Teil 3 aus der geöffneten Stellung in die geschlossene Stellung zurückbewegt wird.

Die Feder 22 stützt sich einendseitig am statischen Teil 2 der Sicherheitsarmatur 1 und andernendseitig an dem beweglichen Teil 3 der Sicherheitsarmatur 1 ab. Die Feder 22 ist vorliegend als Schraubendruckfeder ausgebildet. Die Feder 22 weist einendseitig ein freies Ende 23, 24 auf. Das eine freie Ende 23 wirkt dabei mit einer nicht dargestellten Federaufnahme des statischen Teils 2 zusammen. Das andere freie Ende 24 wirkt demgegenüber mit einer Federaufnahme 25 des beweglichen Teils 3 zusammen, welche am der Scheibe 6 gegenüberliegenden Ende des Führungsabschnitts 19 angeordnet ist.

Die Feder 22 ist spiralförmig ausgebildet und koaxial auf dem Führungsabschnitt 19 und der Führungsaufnahme 20 angeordnet.

Die Figuren 7 und 8 zeigen die Ausführungsform gemäß Figuren 5 und 6 in seitlicher Ansicht. Figur 7 in geschlossener Form und Figur 8 in geöffneter Form.

Unabhängig davon, ob die Sicherheitsarmatur 1 in Form einer Rückschlagklappe (Figuren 1 bis 4) oder einem Rückschlagventil (Figuren 5 bis 8) ausgebildet ist, weist die Sicherheitsarmatur 1 weist einen Ansprechdruck von 50 hPa bis 100 hPa, vorzugsweise von 65 hPa bis 85 hPa, insbesondere von 75 hPa, auf.

Der Ansprechdruck unterliegt einer Toleranz von ± 3 %. Der Schließdruck ist liegt 10 % bis 20 % unterhalb des Ansprechdrucks.

Der Öffnungsdruck liegt vorliegend 5 % bis 10 %, über dem Ansprechdruck.

Selbstverständlich ist die jeweilige Ausführung der Figuren 1 bis 8 auch als Vollhubklappe oder Vollhubventil von der Erfindung erfasst, in welcher der Ansprechdruck dem Öffnungsdruck entspricht.

### Bezugszeichen

- 1: Sicherheitsarmatur
- 2: statischer Teil
- 3: beweglicher Teil
- 4: Rahmen
- 5: Loch
- 6: Klappe
- 6': Scheibe
- 7: Dichtungssitz
- 8: Durchgangsloch
- 9: Welle
- 10: Wellenaufnahme
- 11: Schraube
- 12: Dreharm
- 13: Torsionsfedern
- 14: freies Ende
- 15: freies Ende
- 16: Federaufnahme
- 17: Federaufnahme
- 18: spiralförmiger Abschnitt
- 19: Führungsabschnitt
- 20: Führungsaufnahme
- 21: Verstärkungsabschnitt
- 22: Schraubendruckfeder
- 23: freies Ende
- 24: freies Ende
- 25: Federaufnahme

## Patentansprüche

1. Batteriecontainer für Schienenfahrzeuge, Insbesondere für Eisenbahnen und Straßenbahnen, aufweisend ein Gehäuse, welches einen Innenraum zur Aufnahme von Lithium-Ionen-Akkumulatoren bereitstellt, **dadurch gekennzeichnet, dass** das Gehäuse eine Sicherheitsarmatur aufweist, welche dazu ausgebildet ist, bei Überschreiten eines vorgebbaren Ansprechdrucks wenigstens ein Fluid aus dem Innenraum des Gehäuses abzuleiten und das Gehäuse bei Unterschreiten eines vorgebbaren Schließdrucks fluiddicht zu verschließen.

2. Batteriecontainer nach Anspruch 1, **dadurch gekennzeichnet, dass** die Sicherheitsarmatur als Rückschlagarmatur ausgebildet ist.

3. Batteriecontainer nach Anspruch 2, **dadurch gekennzeichnet, dass** die Rückschlagarmatur als Rückschlagklappe ausgebildet ist.

4. Batteriecontainer nach Anspruch 2, **Dadurch gekennzeichnet, dass** die Rückschlagarmatur als Rückschlagventil, insbesondere Tellerrückschlagventil, ausgebildet ist.

5. Batteriecontainer nach Anspruch 4, **dadurch gekennzeichnet, dass** das Rückschlagventil als Proportionalventil oder als Vollhubventil ausgebildet ist.

6. Batteriecontainer nach einem der vorhergehenden Ansprüche, **dadurch gekennzeichnet, dass** die Sicherheitsarmatur dazu ausgebildet ist, bei Erreichen des vorgebbaren Ansprechdrucks im Innenraum des Gehäuses automatisch eine Strömungsverbindung zwischen dem Innenraum des Gehäuses und der Außenseite des Gehäuses zu öffnen und bei Unterschreiten des vorgebbaren Schließdrucks im Innenraum des Gehäuses die Strömungsverbindung automatisch abzusperren.

7. Batteriecontainer nach einem der Ansprüche 2 bis 6, **dadurch gekennzeichnet, dass** die Sicherheitsarmatur entgegen des im Innenraum des Gehäuses auf sie einwirkenden Drucks federbelastet ist.

8. Batteriecontainer nach einem der vorhergehenden Ansprüche, **dadurch gekennzeichnet, dass** die Sicherheitsarmatur zweiteilig ausgebildet ist, wobei ein statischer Teil der Sicherheitsarmatur relativ zum Gehäuse unbeweglich an diesem angeordnet ist und wobei ein beweglicher Teil relativ beweglich zum Gehäuse an dem statischen Teil der Sicherheitsarmatur angeordnet ist, wobei der bewegliche Teil der Sicherheitsarmatur bei Erreichen des Ansprechdrucks durch rotatorische oder translatorische Bewegung der Herstellung der Strömungsverbindung dient.

9. Batteriecontainer nach Anspruch 8, **gekennzeichnet durch** wenigstens eine Feder, welche sich einendseitig an der Innenseite des Gehäuses oder dem statischen Teil der Sicherheitsarmatur und andernendseitig an dem beweglichen Teil der Sicherheitsarmatur abstützt.

10. Batteriecontainer nach Anspruch 9, **dadurch gekennzeichnet, dass** die Feder als Torsionsfeder ausgebildet ist, wenn die Sicherheitsarmatur als Rückschlagklappe ausgebildet ist.

11. Batteriecontainer nach Anspruch 9, **dadurch gekennzeichnet, dass** die Feder als Schraubenzugfeder oder Schraubendruckfeder ausgebildet ist, wenn die Sicherheitsarmatur als Rückschlagventil ausgebildet ist.

12. Batteriecontainer nach einem der vorhergehenden Ansprüche, **gekennzeichnet durch** ein Sammelrohr und/oder einen Auffangbehälter, der über die Sicherheitsarmatur bei Überschreiten des vorgebbaren Ansprechdrucks mit dem Innenraum des Gehäuses strömungstechnisch verbunden ist.

13. Batteriecontainer nach einem der vorhergehenden Ansprüche, **dadurch gekennzeichnet, dass** die Sicherheitsarmatur einen Ansprechdruck von 50 hPa bis 100 hPa, vorzugsweise von 65 hPa bis 85 hPa, insbesondere von 75 hPa, aufweist.

14. System mit einem Batteriecontainer nach einem der Ansprüche 1 bis 13, wobei im Innenraum des Batteriecontainers wenigstens ein Lithium-Ionen-Akkumulator angeordnet ist.

15. Fahrzeug, insbesondere Schienenfahrzeug, vorzugsweise Eisenbahn oder Straßenbahn, mit System nach Anspruch 14.
